# EUROPÄISCHE PATENTSCHRIFT

(11) **EP 3 151 035 B1**
(45) Veröffentlichungstag und Bekanntmachung des Hinweises auf die Patenterteilung: **14.10.2020**
(21) Anmeldenummer: 16173949.5
(22) Anmeldetag: 10.06.2016
(51) Int. Cl.: G01S 13/931, G01S 13/87, G01S 13/90

(54) **VERFAHREN ZUM BETRIEB VON RADARSENSOREN IN EINEM KRAFTFAHRZEUG UND KRAFTFAHRZEUG**
METHOD FOR OPERATING RADAR SENSORS IN A MOTOR VEHICLE AND MOTOR VEHICLE
PROCEDE DE FONCTIONNEMENT DE CAPTEURS RADARS DANS UN VEHICULE AUTOMOBILE ET VEHICULE AUTOMOBILE

(30) Priorität: 02.10.2015 DE 102015012812
(43) Veröffentlichungstag der Anmeldung: 05.04.2017
(73) Patentinhaber: AUDI AG, 85045 Ingolstadt (DE)
(72) Erfinder: Khlifi, Rachid, 85748 Garching (DE)

(56) Entgegenhaltungen:
- DE-A1- 10 360 890
- DE-A1-102006 007 173
- DE-A1-102009 006 335
- JP-A- 2014 106 147
- JRI LEE ET AL: "A Fully-Integrated 77-GHz FMCW Radar Transceiver in 65-nm CMOS Technology", IEEE JOURNAL OF SOLID-STATE CIRCUITS, Bd. 45, Nr. 12, 1. Dezember 2010 (2010-12-01), Seiten 2746-2756, XP055088008, ISSN: 0018-9200, DOI: 10.1109/JSSC.2010.2075250

## Beschreibung

Die Erfindung betrifft ein Verfahren zum Betrieb von Radarsensoren in einem Kraftfahrzeug, wobei die Radardaten der Radarsensoren durch wenigstens ein Fahrerassistenzsystem und/oder Sicherheitssystem ausgewertet werden. Daneben betrifft die Erfindung ein Kraftfahrzeug.

Die Verwendung von Radarsensoren in Kraftfahrzeugen ist im Stand der Technik bereits weitgehend bekannt. Radarsensoren werden heutzutage meist als Umfeldsensoren für einen mittleren und größeren Distanzbereich eingesetzt, um andere Verkehrsteilnehmer oder größere Objekte in Distanz, Winkel und Relativgeschwindigkeit bestimmen zu können. Derartige Radardaten können in Umfeldmodelle eingehen oder auch unmittelbar Fahrzeugsystemen zur Verfügung gestellt werden. Nutzen aus Radardaten ziehen im bekannten Stand der Technik beispielsweise Längsführungssysteme, wie ACC, oder auch Sicherheitssysteme. Die DE103608901A1 offenbart einen Radarsensor und ein Verfahren zu dessen Betrieb, wobei eine Anpassung der Sensorcharakteristik wahrend des Fahrbetriebs eines Fahrzeugs dadurch erreicht werden soll, dass Sendeparameter der Sendeeinrichtung und Empfangsparameter der Empfangseinrichtung veränderbar sind. Hierbei können Informationen über Umfeldkategorien genutzt werden, um Schlussfolgerungen auf die vorzugsweise einzustellenden Sensoreigenschaften zu ziehen. So kann z.B. eine zu erwartende Umgebung in der näheren Zukunft beispielsweise eine Kreuzung sein, um einen Adaptionsprozess auszulösen.

Radarsensoren herkömmlicher Bauart weisen meist eine größere Ausdehnung auf und sind eher klobig, nachdem die Antennen sowie die unmittelbar an der Antenne benötigten Elektronikkomponenten, also das Radar-Frontend, in einem Gehäuse integriert sind. Hauptsächlich bilden die Elektronikkomponenten dabei den Radar-Transceiver, der eine Frequenzsteuerung (üblicherweise umfassend eine Phasenregelschleife - PLL), Mischeinrichtungen, einem Low Noise Amplifier (LNA) und dergleichen enthält, oft werden jedoch auch Steuermodule und digitale Signalverarbeitungskomponenten antennennah realisiert, beispielweise um bereits aufbereitete Sensordaten, beispielsweise Objektlisten, auf einen angeschlossenen Bus, beispielsweise einen CAN-Bus, geben zu können.

Die Realisierung von Radarkomponenten auf Halbleiterbasis erwies sich lange Zeit als schwierig, da teure Spezialhalbleiter, insbesondere GaAs, benötigt wurden. Es wurden kleinere Radarsensoren vorgeschlagen, deren gesamtes Radar-Frontend auf einem einzigen Chip in SiGe-Technologie realisiert ist, ehe auch Lösungen in der CMOS-Technologie bekannt wurden. Solche Lösungen sind Ergebnis der Erweiterung der CMOS-Technologie auf Hochfrequenzanwendungen, was oft auch als RF-CMOS bezeichnet wird. Ein solcher CMOS-Radarchip ist äußerst kleinbauend realisiert und nutzt keine teuren Spezialhalbleiter, bietet also vor allem in der Herstellung deutliche Vorteile gegenüber anderen Halbleitertechnologien. Eine beispielhafte Realisierung eines 77 GHz-Radar-Transceivers als ein CMOS-Chip ist in dem Artikel von Jri Lee et al., "A Fully Integrated 77-GHz FMCW Radar Transceiver in 65-nm CMOS Technology", IEEE Journal of Solid State Circuits 45 (2010), S. 2746-2755, beschrieben.

Nachdem zudem vorgeschlagen wurde, den Chip und die Antenne in einem gemeinsamen Package zu realisieren, ist ein äußerst kostengünstiger kleiner Radarsensor möglich, der Bauraumanforderungen deutlich besser erfüllen kann und aufgrund der kurzen Signalwege auch ein sehr niedriges Signal-Zu-Rausch-Verhältnis aufweist sowie für hohe Frequenzen und größere, variable Frequenzbandbreiten geeignet ist. Daher lassen sich derartige, kleinbauende Radarsensoren auch für Kurzreichweiten-Anwendungen, beispielsweise im Bereich von 30 cm bis 10 m, einsetzen.

Es wurde auch bereits vorgeschlagen, einen solchen CMOS-Transceiver-Chip und/oder ein Package mit CMOS-Transceiver-Chip und Antenne auf einer gemeinsamen Leiterplatte mit einem digitalen Signalverarbeitungsprozessor (DSP-Prozessor) vorzusehen oder die Funktionen des Signalverarbeitungsprozessors ebenso in den CMOS-Transceiver-Chip zu integrieren. Eine ähnliche Integration ist für Steuerungsfunktionen möglich.

Wie bereits erwähnt, werden die Daten von Radarsensoren meist in Fahrerassistenzsystemen, insbesondere Sicherheitssystemen, genutzt. In derartigen Fahrerassistenzsystemen spielt die Erfassung von dynamischen und statischen Zielen im Umfeld des eigenen Kraftfahrzeugs eine wichtige Rolle. Abhängig von den in der Umgebung des Kraftfahrzeugs erkannten Objekten kann eine Bewertung der Verkehrssituation durchgeführt werden, wobei beispielsweise Maßnahmenkriterien die üblicherweise bereits vorausgewerteten Sensordaten, umfassend auch die Radardaten, auswerten und bei Erfüllung des Maßnahmenkriteriums eine diesem zugeordnete Maßnahme durchgeführt wird. Beispielsweise kann vorgesehen sein, dass detektierte Objekte in Form einer Objektliste von den Radarsensoren an ein Steuergerät übertragen werden, in welchem die Funktionen des Fahrerassistenzsystems/Sicherheitssystems ausgeführt werden. Um Falsch- oder Fehlwarnungen in komplexen Verkehrssituationen vorzubeugen, wurde vorgeschlagen, in einer Vorstufe eine Situationsanalyse (SITA) der aktuellen Fahrsituation durchzuführen. Bei der SITA werden eine Vielzahl von Parametern herangezogen, um eine gute Bewertung durch die Maßnahmenkriterien zu erlauben.

Kreuzungsszenarien stellen eine große Herausforderung für Fahrerassistenzsysteme, insbesondere Sicherheitssysteme, dar. Dies liegt in der großen Anzahl diverser Objektklassen begründet, beispielsweise Fußgänger, Radfahrer, Kraftfahrzeuge und unterschiedliche stehende Hindernisse, insbesondere parkende Autos, Gebäude, Ampeln und dergleichen. Gerade im Hinblick auf Sicherheitssysteme ist es ein Ziel, eine rechtzeitige Detektion und Klassifikation aller möglichen kritischen Kollisionsobjekte in einem derartigen Multiobjektszenario zu erreichen, andererseits muss ein geeigneter Kommunikationskanal zum Fahrer aufgefunden werden, um auch in komplexen Verkehrssituationen eine hinreichende Unterstützung zu bieten.

Bislang verwendete Sensoren decken üblicherweise nur einen bestimmten Bereich einer Kreuzung ab, beispielsweise nur querende Verkehrsteilnehmer bei einem Erfassungsbereich in Fahrtrichtung mit einem Öffnungswinkel von 90°. Die Unterstützung des Fahrers basierend auf Radarsensoren im Kreuzungsbereich ist mithin auf bestimmte Szenarien eingeschränkt. Doch auch bei einer größeren Zahl von Radarsensoren besteht weiterhin das Problem, dass die Detektions- und Interpretationsgenauigkeit verbessert werden muss, um die hinreichende Unterstützung des Fahrers an einer unübersichtlichen, komplexen Kreuzung zu gewährleisten.

Der Erfindung liegt daher die Aufgabe zugrunde, eine Möglichkeit zur Erfassung hochkomplexer Fahrsituationen eines Kraftfahrzeugs in Kreuzungsbereichen anzugeben.

Zur Lösung dieser Aufgabe ist bei einem Verfahren der eingangs genannten Art erfindungsgemäß vorgesehen, dass bei Erkennung eines Betriebs des Kraftfahrzeugs in einer Kreuzungsumgebung wenigstens die die Kreuzungsumgebung erfassenden Radarsensoren in einem durch wenigstens einen kreuzungsspezifischen Betriebsparametersatz beschriebenen Kreuzungsbetriebsmodus betrieben werden, wobei eine Kreuzungsgeometrieinformation durch Lokalisierung von Straßenbegrenzungen und/oder Randbebauungsobjekten in den Radardaten ermittelt wird, wobei die Erfassungsbereiche der Radarsensoren anhand der aus den Radardaten gewonnenen Kreuzungsgeometrieinformation auf die Kreuzungsgeometrie angepasst werden.

Erfindungsgemäß wird mithin vorgeschlagen, eine komplette radarbasierte und hochauflösende Überwachung der gesamten Kreuzungsumgebung durch eine spezielle Anpassung des Betriebs der Radarsensoren auf eine derartige Kreuzungssituation zu liefern. Ist eine entsprechende Anpassung erreicht, können verlässlich verschiedenste Objekte in der Kreuzungsumgebung detektiert, klassifiziert und durch die Maßnahmenkriterien des Fahrerassistenzsystems/Sicherheitssystems bewertet werden, um auf verlässliche Art und Weise erfüllten Maßnahmenkriterien zugeordnete Maßnahmen durchführen zu können. Dabei existieren verschiedene Möglichkeiten, um einen Betrieb in einer Kreuzungsumgebung frühzeitig zu erkennen.

Hierzu kann beispielsweise vorgesehen sein, dass zur Erkennung eines Betriebs in einer Kreuzungsumgebung prädiktive Streckendaten und/oder Navigationsdaten eines Navigationssystems und/oder Sensordaten wenigstens eines Umgebungssensors des Kraftfahrzeugs, insbesondere die Radardaten, und/oder Verkehrszeichendaten einer Verkehrszeichenerkennung ausgewertet werden. Die Position heutiger Kraftfahrzeuge wird ohnehin meist, beispielsweise über einen GPS-Sensor und Koppelnavigation, ständig nachverfolgt. In einem Navigationssystem des Kraftfahrzeugs liegen digitale Kartendaten vor, die eine Lokalisierung des Kraftfahrzeugs ermöglichen. Ist nicht die Route des Kraftfahrzeugs ohnehin durch eine aktive Zielführung vorbestimmt, mithin hieraus bekannt, dass eine Kreuzungsumgebung vorausliegt bzw. erreicht wird, wurde bereits vorgeschlagen, prädiktive Streckendaten vorherzusagen, die basierend auf aktuellen Betriebsdaten des Kraftfahrzeugs und gegebenenfalls Historiendaten ebenso voraussagen können, dass demnächst eine Kreuzung erreicht wird. Bewegt sich das Kraftfahrzeug beispielsweise auf einer Straße in eine bestimmte Richtung und ist aus digitalem Kartenmaterial bekannt, dass eine Kreuzung vorausliegt, kann üblicherweise auch deren Erreichen bzw. der Eintritt in die Kreuzungsumgebung vorhergesagt werden. Die Kreuzungsumgebung kann dabei insbesondere in Abhängigkeit der Erfassungsreichweite der Radarsensoren im Kreuzungsbetriebsmodus definiert werden, beispielsweise als kreisförmige Umgebung um den Kreuzungsmittelpunkt mit einem Radius, der der Erfassungsreichweite im Kreuzungsbetriebsmodus entspricht. Neben den prädiktiven, letztlich auf digitalen Kartendaten eines Navigationssystems basierenden Vorhersagen zum Erreichen einer Kreuzung kann auch vorgesehen sein, andere Möglichkeiten zusätzlich oder alternativ zu nutzen, um den Betrieb in einer Kreuzungsumgebung zu detektieren. Beispielsweise können Sensordaten wenigstens eines Umfeldsensors des Kraftfahrzeugs, insbesondere auch die Radardaten, ausgewertet werden, um anhand eines aus diesen erhaltenen Straßenverlaufs das Vorliegen einer Kreuzung feststellen zu können. Ferner bietet sich auch eine Verkehrszeichenerkennung an, um Kreuzungsumgebungen zu erkennen.

Die genauen Möglichkeiten zur Positionsbestimmung des Kraftfahrzeugs auch relativ zu einer Kreuzung bzw. auf der Kreuzung erlauben es mit besonderem Vorteil, nur die Radarsensoren im Kreuzungsbetriebsmodus zu betreiben, die auch die Kreuzungsumgebung mit ihren Erfassungsbereichen wahrnehmen. Gibt eine Positionsinformation des Kraftfahrzeugs an, dass dieses gerade in eine Kreuzung einfährt, ist es ausreichend, die vorderen Radarsensoren im Kreuzungsbetriebsmodus zu betreiben, wobei beim Ausfahren aus der Kreuzung beispielsweise die hinteren Radarsensoren als im Kreuzungsbetriebsmodus betrieben ausreichen. Mit anderen Worten kann erfindungsgemäß vorgesehen sein, dass im Kreuzungsbetriebsmodus zu betreibende Radarsensoren in Abhängigkeit einer Positionsinformation relativ zu der Kreuzungsumgebung derart ausgewählt werden, dass nur die Radarsensoren im Kreuzungsbetriebsmodus betrieben werden, die die Kreuzungsumgebung erfassen. Je nachdem, wo sich das Kraftfahrzeug in der Kreuzungsumgebung befindet, werden also nur die relevanten Radarsensoren in ihrem Betrieb angepasst. Auf diese Art und Weise werden Berechnungs- und Speicherressourcen eingespart, nachdem für die Kreuzungsumgebung als komplexe Verkehrssituation der Kreuzungsbetriebsmodus eine erhöhte Auflösung, bessere Objekttrennung und dergleichen bietet, was einen höheren Leistungsbedarf der Radarsensoren und/oder von die Radardaten auswertenden Komponenten mit sich bringen kann.

Es sei jedoch im Allgemeinen angemerkt, dass, da die Überquerung einer Kreuzung nicht lange in Anspruch nimmt, die erhöhte Rechenintensität und erhöhte Nutzung der Leistungsressourcen durch die Radarsensoren bei der Erfassung der Kreuzungsumgebung problemlos möglich, da kein derartiger Dauerbetrieb vorgeschlagen wird, sondern lediglich eine kurzzeitige Adaption des Betriebs der Radarsensoren in der Kreuzungsumgebung. Nach der Durchquerung der Kreuzungsumgebung werden die Betriebsparameter der Radarsensoren wieder auf einen Normalbetriebsmodus zurückgesetzt.

Die Erfindung nutzt dabei mit besonderem Vorteil aus, dass neue, hochauflösende RF-CMOS-Radartechnologie oder Halbleitertechnologie zur Verfügung steht, mit der bei geeigneten Betriebsparametern der Radarsensoren eine sehr genaue statische und dynamische Karte der gesamten Kreuzungsumgebung ermittelt werden kann. Mit besonderem Vorteil ist mithin vorgesehen, dass Radarsensoren mit einem einen Radartransceiver realisierenden Halbleiterchip, insbesondere CMOS-Chip, verwendet werden. Dabei wird die Hochintegration, wie eingangs dargestellt, bevorzugt weitergeführt, um die Signalwege innerhalb des Radarsensors weiter zu verkürzen und einen größeren Raum möglicher Betriebsparameter zu erschließen, wozu mit besonderem Vorteil vorgesehen sein kann, dass durch den Halbleiterchip auch eine Steuereinheit des Radarsensors und/oder eine digitale Signalverarbeitungskomponente des Radarsensors realisiert werden und/oder der Halbleiterchip und die Antennenanordnung als ein Package realisiert sind. Die Verwendung von Radarsensoren, die auf Halbleitertechnologie, bevorzugt CMOS-Technologie, basieren, ermöglichen die Abdeckung vieler möglicher Verkehrsszenarien in einer Kreuzungsumgebung. Alle beweglichen Objekte, beispielsweise Radfahrer, Fußgänger oder andere Kraftfahrzeuge in allen Richtungen im Kreuzungsbereich können rechtzeitig detektiert und klassifiziert werden. Wird die Fahrsituation für kritisch erachtet, ist mithin beispielsweise ein Maßnahmenkriterium des Fahrerassistenzsystems/Sicherheitssystems erfüllt, kann eine entsprechende Maßnahme, beispielsweise eine Warnung und/oder ein Fahreingriff, insbesondere ein Bremsvorgang, eingeleitet werden.

Eine konkrete Ausbildung der vorliegenden Erfindung sieht vor, dass die Radarsensoren im Kreuzungsbereich mit einer Frequenzbandbreite von wenigstens 1 GHz, insbesondere von 4 GHz, und/oder mit einer gegenüber einem Normalbetriebsmodus reduzierten Reichweite betrieben werden. Insbesondere bei auf Halbleitertechnologie, bevorzugt CMOS-Technologie, basierenden Radarsensoren sind hohe Frequenzbandbreiten bis zu 4 GHz möglich, die eine hervorragende Abstandstrennfähigkeit im Nahbereich, also insbesondere auf Kosten von Reichweite, erlauben. Während die Radarsensoren im üblicherweise verwendeten Normalbetriebsmodus also möglichst auf die Detektion von Objekten auch in ihrer Maximalreichweite ausgelegt betrieben werden, jedoch mit insgesamt geringerer Auflösung, wird für die Kreuzung vorgeschlagen, eine möglichst hohe Frequenzbandbreite und gegebenenfalls eine reduzierte Reichweite zu verwenden, wobei besonders bevorzugt eine Frequenzbandbreite von 4 GHz verwendet wird. Dies ermöglicht die Trennung vieler Objekte in kleineren Räumen, was durch die angepasste, erhöhte Abstandsauflösung gegeben ist.

Es sei jedoch darauf hingewiesen, dass die Erhöhung der Abstandsauflösung in der Kreuzungsumgebung weniger priorisiert werden kann als die Erhöhung der Dopplerauflösung (Geschwindigkeiten) und der Winkelauflösung, was im Folgenden noch näher ausgeführt werden wird. Dann sieht die Erfindung im Kreuzungsbetriebsmodus letztlich vor, die Speicher- und Berechnungsressourcen in den Radarsensoren auf Kosten von Reichweite und/oder Abstandsauflösung für eine verbesserte Winkelauflösung und/oder Dopplerauflösung zu nutzen. Nachdem bereits durch eine Reduzierung der Reichweite deutliche Ressourceneinsparungen möglich sind, beispielsweise durch eine Reichweitenreduzierung von 80m im Normalbetriebsmodus auf 30m im Kreuzungsbetriebsmodus, ist es beispielsweise denkbar, die Abstandsauflösung von etwa einem Meter aus dem Normalbetriebsmodus im Kreuzungsbetriebsmodus beizubehalten und eine verbesserte Doppler- und Winkelauflösung anzustreben, was im Folgenden näher dargelegt werden wird.

Eine weitere, besonders bevorzugte Ausgestaltung der vorliegenden Erfindung sieht vor, dass im Kreuzungsbetriebsmodus gegenüber einem außerhalb von Kreuzungsumgebungen eingestellten Normalbetriebsmodus die Anzahl von in einem Messzyklus verwendeten ansteigenden Frequenzrampen erhöht ist, insbesondere durch Erhöhung der Anzahl der Chirps pro Messzeit im Messzyklus und/oder durch Verlängerung der Messdauer im Messzyklus. Dies ermöglicht eine verbesserte Messung der Geschwindigkeitskomponenten aller beweglichen Objekte, die auch entsprechend differenziert bewertet werden können. In diesem Kontext ist die Dopplerauflösung wesentlich, für die bei hochauflösenden Halbleiter-Radartechnologien mehrere ansteigende Frequenzrampen, also mehrere Chirps, pro Messzyklus verwendet werden. Erhöht man die Anzahl der ansteigenden Frequenzrampen in einem Messzyklus, kann hierdurch die Dopplerauflösung maximiert werden. Zudem bietet das dadurch entstehende "Multi-up-Chirp"-Verfahren die Möglichkeit, den Abstand und die Geschwindigkeit eines detektierten Objekts unabhängig voneinander zu messen. Hierdurch kann eine drastische Reduzierung von Fehlmessungen bewegter Objekte in komplexeren Kreuzungsszenarien drastisch reduziert werden. Konkret kann diese Erhöhung der Anzahl ansteigender Frequenzrampen beim Senden während eines Messzyklus auf verschiedene Art und Weise erreicht werden, beispielsweise durch Erhöhung der Anzahl der Chirps pro Messzeit im Messzyklus, insbesondere also auch durch Anpassung der Rampensteigung der ansteigenden Frequenzrampen. Auch ist eine Variation, hier Verlängerung, der Messzeit im Messzyklus denkbar, da dann eine größere Anzahl von Chirps verwendet werden kann. Insgesamt ergibt sich durch die beschriebene Erhöhung der Dopplerauflösung eine verbesserte Trennung von Objekten mit ähnlichen Geschwindigkeiten, beispielsweise mehreren anderen Kraftfahrzeugen, mehreren Fußgängern, mehreren Radfahrern und dergleichen.

Es sind Radarsensoren bekannt, die die Anzahl der Rampen als Zweierpotenzen einstellen können. In diesem Kontext kann konkret vorgesehen sein, dass in dem Kreuzungsbetriebsmodus wenigstens 256 ansteigenden Frequenzrampen pro Messzyklus verwendet werden, Beispielsweise kann auch mit 512 oder 1024 Rampen gearbeitet werden. Für Normalbetriebsmodi, die außerhalb der Kreuzungen verwendet werden und sich beispielsweise auf im Wesentlichen gerade, einmündungsfreie Straßen beziehen, ist die Verwendung von maximal 64 oder 128 Rampen ausreichend. Beispielsweise kann die Dopplerauflösung durch derartige Maßnahmen auf 0,5 km/h oder niedriger verbessert werden.

Eine weitere Erhöhung der Qualität der Radardaten speziell für die Kreuzungsumgebung lässt sich dadurch erreichen, dass im Kreuzungsbetriebsmodus die Erfassungsbereiche der Radarsensoren gegenüber einem Normalbetriebsmodus zu einer größeren Überlappung angepasst werden, wobei auf Überlappungsbereiche der Erfassungsbereiche mehrerer Radarsensoren bezogene Radardaten gegeneinander plausibilisiert und/oder gemeinsam statistisch ausgewertet werden, und/oder dass die Erfassungsbereiche anhand einer insbesondere aus den Radardaten gewonnenen Kreuzungsgeometrieinformation auf die Kreuzungsgeometrie angepasst werden, i und zwar durch Aktivierung und/oder Deaktivierung von Antennenelementen einer oder der Antennenanordnung wenigstens eines Radarsensors. Zum einen kann mithin vorgesehen sein, die Redundanz der vorgenommenen Messungen zu erhöhen, indem gezielt dafür gesorgt wird, dass sich die Erfassungsbereiche der Radarsensoren gegenüber einem außerhalb der Kreuzungsumgebung verwendeten Normalbetriebsmodus erhöhen. Objekte werden mithin durch mehrere Radarsensoren vermessen, wobei die redundant vorliegenden Radardaten zur gegenseitigen Plausibilisierung genauso genutzt werden können wie zur statistischen Kombination der redundanten Radardaten, um den Gesamtfehler zu reduzieren. Ohnehin wird es im Rahmen der vorliegenden Erfindung auch allgemein bevorzugt, wenn als Radarsensoren Weitwinkel-Radarsensoren verwendet werden, die beispielsweise im Azimut einen Winkelbereich von wenigstens 150°, bevorzugt wenigstens 160°, durch ihren Erfassungsbereich abdecken, wobei zudem mit besonderem Vorteil vorgesehen sein kann, dass die Antennenanordnung des Radarsensors zur Winkelauflösung in zwei zueinander senkrechten Ebenen ausgebildet ist, insbesondere zur Messung eines Elevationswinkels und eines Azimutwinkels. Beispielsweise können Radarsensoren verwendet werden, die einen Öffnungswinkel ihres Erfassungsbereichs im Azimut von wenigstens 150°, bevorzugt wenigstens 160°, und in der Elevation von wenigstens 90°, bevorzugt wenigstens 100°, aufweisen. Spätestens durch die Ausgestaltung von Radarsensoren als Weitwinkel-Radarsensoren sind viele Überlappungsbereiche zwischen den Radarsensoren gegeben, so dass in dem die Radardaten auswertenden Steuergerät eine weitere Plausibilisierung der Messdaten vorgenommen werden kann bzw. die Detektionsgüte durch statistische Kombination erhöht werden kann. Auch auf diese Art und Weise werden mithin Fehlauslösungen bzw. Fehlmessungen drastisch reduziert.

In einer weiteren bevorzugten Ausführungsform der vorliegenden Erfindung wird die Kreuzungsgeometrieinformation durch Lokalisierung von Straßenbegrenzungen und/oder Randbebauungsobjekten in den Radardaten ermittelt. Wie im Stand der Technik bereits gezeigt wurde, erlauben es insbesondere die auf Halbleiter-Technologie basierenden Radarsensoren aufgrund ihrer hohen Auflösung und Detektionsgenauigkeit, auch Straßenbegrenzungen, beispielsweise den Übergang von Straßenbelag zu einem anderen Untergrund oder Bordsteinen, zu lokalisieren und zu klassifizieren, so dass der Straßenverlauf bekannt wird. Ist ein Gehsteig vorhanden, geben weitere Untergrundwechsel und/oder Randbebauungsobjekte, beispielsweise Häuser, Informationen darüber, wo dieser beginnt und endet. Insbesondere beschreibt die Kreuzungsgeometrieinformation daher den Verlauf der Straßen, also befahrbare Flächen, und gegebenenfalls, falls vorhanden, den Verlauf von Gehsteigen, also bedingt befahrbaren, jedenfalls aber begehbaren Flächen. Die so definierten befahrbaren/begehbaren Flächen sind es, die hauptsächlich relevant für die Beurteilung der komplexen Fahrsituation in der Kreuzungsumgebung sind, so dass über bekannte Möglichkeiten des Beamforming der Erfassungsbereich bzw. die Abstrahlcharakteristik der Radarsensoren so eingestellt werden kann, dass gerade diese interessierenden Unterbereiche erfasst werden. Die Einstellung eines Erfassungsbereichs kann beispielsweise durch Aktivierung und/oder Deaktivierung weiterer Antennenelemente der Antennenanordnung erfolgen. Dabei können auch Grundlagen des auch für Radarsensoren bekannten MIMO-Konzepts ("Multiple Input Multiple Output") eingesetzt werden. Verschiedenste Möglichkeiten zur Anpassung von Erfassungsbereichen können verwendet werden, um dynamisch gezielt die befahrbaren und/oder begehbaren Flächen der Kreuzungsumgebung als Unterbereiche zu erfassen, die für die Bewertung der Fahrsituation relevant sind.

Mit besonderem Vorteil kann im Rahmen der vorliegenden Erfindung auch das SAR-Konzept ("Synthetic Aperture Radar") zweckmäßig in der Kreuzungsumgebung Anwendung finden, insbesondere für wenigstens teilweise seitlich ausgerichtete Radarsensoren des Kraftfahrzeugs. Bewegt sich der Radarsensor senkrecht zur Strahlrichtung, lässt sich nicht nur gedacht die Antennenanordnung und somit der Erfassungsbereich vergrößern, sondern es ist auch eine hervorragende, deutliche verbesserte Ortsauflösung, insbesondere bezüglich der Winkel, gegeben. Die Anwendung des SAR-Konzept, beispielsweise über die Verwendung entsprechender SAR-Algorithmen, im Kraftfahrzeug hat deutlich erhöhte Anforderungen an Speicher- und Berechnungsressourcen, so dass ggf. Abstriche in der Abstandsauflösung erforderlich sind, um es umzusetzen. Allerdings wird die Verwendung des SAR-Konzepts im Rahmen der vorliegenden Erfindung nur kurzzeitig während der Durchquerung der Kreuzungsumgebung eingestellt, so dass diesbezüglich die Realisierbarkeit gegeben ist.

Es sei an dieser Stelle noch darauf hingewiesen, dass die Kreuzungsgeometrieinformation, insbesondere auch unabhängig von der Anpassung von Erfassungsbereichen, dahingehend verwendet werden kann, eine verbesserte Bewertung der aktuellen Fahrsituation durch das Fahrerassistenzsystem/Sicherheitssystem zu erzielen. Ist der Kreuzungsverlauf, insbesondere durch Detektion der Randbebauung und/oder Straßenbegrenzung mittels der hochauflösenden Radartechnologie, erfasst, ist eine verbesserte Ermittlung von Fahrsituationsdaten, beispielsweise möglichen Kollisionstrajektorien, möglich. Insbesondere kann vorgesehen sein, dass die Kreuzungsgeometrieinformation bei der Prädiktion von zukünftigen Bewegungen des eigenen Kraftfahrzeugs und/oder von Verkehrsteilnehmern seitens des Fahrerassistenzsystems und/oder Sicherheitssystems berücksichtigt wird, insbesondere unter weiterer Berücksichtigung einer Poseninformation des Kraftfahrzeugs relativ zur Kreuzungsgeometrie. Anhand der erfassten Randbebauungsobjekte/Straßenbegrenzungen ist es nämlich auch möglich, die Position und Orientierung des eigenen Kraftfahrzeugs zum Kreuzungsverlauf, also die Pose, zu erfassen. Durch eine solche radarbasierte Lokalisierung des eigenen Kraftfahrzeugs in der Kreuzungsumgebung können unter Heranziehung der Kreuzungsgeometrie bestimmte Manöver, beispielsweise Abbiegen ohne Betätigung des Fahrtrichtungsanzeigers, automatisch durch das Fahrerassistenzsystem/Sicherheitssystem erkannt werden und zur Bewertung möglicher Kollisionen hergezogen werden. Auch für andere detektierte Verkehrsteilnehmer ist durch die Kenntnis von befahrbaren und/oder begehbaren Flächen anhand der Kreuzungsgeometrieinformation eine verbesserte Prädiktion von zukünftigen Trajektorien möglich.

Eine weitere vorteilhafte Ausgestaltung der vorliegenden Erfindung sieht vor, dass bei in unterschiedlichen Subbetriebsmodi jeweils für einen Messzyklus betriebenen Radarsensoren die Abfolge der Subbetriebsmodi und/oder die relative Anzahl der Subbetriebsmodi zueinander gegenüber einem außerhalb der Kreuzungsumgebung veränderten Normalbetriebsmodus verändert wird.

Dadurch wird ein weiterer Freiheitsgrad genutzt, um die Betrieb der Radarsensoren optimal auf den Kreuzungsbereich einzustellen. Insbesondere kann, da, wie erwähnt, die Abstandsauflösung weniger priorisiert sein kann, vorgesehen sein, dass der Anteil von Messzyklen, die wenigstens einen Subbetriebsmodus mit hoher Abstandsauflösung nutzen, gegenüber dem Anteil an Messzyklen, die wenigstens einen Subbetriebsmodus mit niedrigerer Abstandsauflösung, aber höherer Geschwindigkeitsauflösung und/oder Winkelauflösung nutzen, reduziert ist. Beispielsweise können jeweils fünf Messzyklen, in denen mit eher niedriger Frequenzbandbreite, beispielsweise 1 GHz, aber hoher Anzahl steigender Frequenzrampen, beispielsweise 256, gemessen wird, durch jeweils einen Messzyklus getrennt werden, in dem mit hoher Frequenzbrandbreite, beispielsweise 4 GHz, aber geringerer Rampenzahl, beispielsweise 64, gemessen wird, während im Normalbetriebsmodus diese Subbetriebsmodi jeweils abwechseln.

Eine weitere, besonders vorteilhafte Ausbildung der vorliegenden Erfindung sieht vor, dass im Kreuzungsbetriebsmodus wenigstens ein insbesondere zusätzlicher und/oder eine höhere Genauigkeit erzielender Winkelauflösungsalgorithmus, insbesondere ein MUSIC- und/oder ein ESPRIT-Algorithmus, aktiviert wird. Auch eine verbesserte Winkelauflösung kann bevorzugt, wie bereits bezüglich des SAR-Konzepts angedeutet wurde, einen Beitrag zur Trennung von Objekten in einer komplexen Fahrsituation in einer Kreuzungsumgebung liefern. Denn in Kreuzungsbereichen können häufig Objekte mit dem gleichen Abstand und der gleichen Geschwindigkeit auftreten, so dass eine Verbesserung der Winkelauflösung auch hier die Zahl an Fehlmessungen drastisch reduziert. Insbesondere können auch eine höhere Rechenleistung erfordernde Winkelauflösungsalgorithmen eingesetzt werden, beispielsweise der MUSIC-Algorithmus ("MUltiple Signal Classification") und/oder der ESPRIT-Algorithmus ("Estimation of Signal Parameters via Rotational Invariance Techniques"). Diese Algorithmen sind beispielsweise im Übersichtsartikel "Two Decades of Array Signal Processing Research" von H. Kriem und M. Viberg, IEEE Signal Processing Magazine, 1996, beschrieben.

Die im erfindungsgemäßen Verfahren verwendeten Radarsensoren decken zweckmäßig die gesamte Umgebung des Kraftfahrzeugs in einem 360°-Winkelbereich ab. Hierzu können bevorzugt acht Radarsensoren, insbesondere Weitwinkel-Radarsensoren, vorgesehen werden, die bevorzugt auf Halbleiter-Technologie basieren und im Kraftfahrzeug verdeckt verbaut werden können. Beispielsweise können drei auf das Vorfeld des Kraftfahrzeugs gerichtete Radarsensoren in einem vorderen Stoßfänger des Kraftfahrzeugs verbaut sein, drei weitere auf das Rückfeld des Kraftfahrzeugs gerichtete Radarsensoren in einem hinteren Stoßfänger und zwei weitere, seitlich ausgerichtete Radarsensoren in Türen des Kraftfahrzeugs, wobei ein radardurchlässiges Fenster in das Türblech eingelassen werden kann und überlackiert werden kann, um so nicht gesehen werden zu können.

Gerade in diesem Kontext, aber auch allgemein, ist es vorteilhaft, wenn die Radardaten der Radarsensoren zur Erstellung und/oder Aktualisierung eines Umfeldmodells des Kraftfahrzeugs verwendet werden. Mit beispielsweise acht Radarsensoren, verteilt auf allen Seiten des Kraftfahrzeugs, wird eine gute Erfassung des gesamten dynamischen und statischen Umfelds realisiert. Basierend auf den Radardaten kann eine Umfeldkarte, mithin ein Umfeldmodell, des Kraftfahrzeugs generiert werden, welches besonders geeignet zur weiteren Auswertung, beispielsweise durch Maßnahmenkriterium des Fahrerassistenzsystems und/oder Sicherheitssystems, ist. Insbesondere ermöglicht es die Verwendung eines solchen radarbasierten Umfeldmodells besonders einfach, durch ein Fahrerassistenzsystem das Kraftfahrzeug automatisch durch die Kreuzungsumgebung zu steuern. Auf diese Art und Weise ist eine Art "Kreuzungspilot" als zusätzliche Assistenzfunktion realisiert, welche mithin eine vollständig automatische Längs- und Querführung des Kraftfahrzeugs in der Kreuzungsumgebung bereitstellt. Durch das Umfeldmodell beschriebene, freie und belegte Bereiche sowie bewegte und unbewegte Objekte können bei der Bahnplanung und Berechnung der Trajektorien herangezogen werden. Die Quer- und Längsführung kann das Fahrerassistenzsystem anhand der berechneten Trajektorien übernehmen, so dass das Kraftfahrzeug automatisch die Kreuzung überquert oder automatisch Abbiegemanöver fährt.

Als spezielle Art eines Maßnahmenkriteriums kann ein Kritikalitätskriterium vorgesehen sein, dem als Maßnahme die Ausgabe wenigstens einer Warninformation an einen Fahrer des Kraftfahrzeugs zugeordnet ist. Mithin kann in anderen Worten auch beim erfindungsgemäßen Verfahren vorgesehen sein, dass bei Detektion einer ein Kritikalitätskriterium erfüllenden Fahrsituation durch Auswertung der Radardaten wenigstens eine Warninformation an einen Fahrer des Kraftfahrzeugs ausgegeben wird. Dabei bietet es sich im Rahmen der vorliegenden Erfindung an, eine speziell für Kreuzungssituationen geeignete, dem Fahrer die Fahrsituation intuitiv vereinfacht darstellende Ausgabe zu verwenden, so dass eine besonders vorteilhafte Weiterbildung der Erfindung vorsieht, dass die Warninformation in einem schematischen, die Kreuzung symbolisierenden Darstellungselement ausgegeben wird. Dabei kann insbesondere vorgesehen sein, dass das Darstellungselement während der gesamten Durchfahrt der Kreuzungsumgebung ausgegeben und genutzt wird, um zusätzlich auch die Warninformation auszugeben, wenn dies notwendig wird.

In einer konkreten Ausgestaltung kann in diesem Kontext vorgesehen sein, dass als Darstellungselement ein Kreis mit sich durch den Mittelpunkt des Kreises erstreckenden geraden, die Straßen symbolisierenden Linien gewählt wird, wobei ein Warnsymbol auf den Linien und/oder gemeinsam mit einem Richtungspfeil zur Zuordnung des Warnsymbols in einem der durch die Linien unterteilten Viertelkreise eingeblendet wird. Dabei kann beispielsweise vorgesehen sein, dass ein Symbol oder der gesamte hervorzuhebende Viertelkreis in einer Warnfarbe eingefärbt wird, beispielsweise in rot, wobei zusätzlich ein Pfeil angezeigt werden kann, der die Zuordnung ermöglicht. Besteht beispielsweise eine Kollisionsgefahr mit einem auf der Gegenfahrbahn entgegenkommenden Kraftfahrzeug, kann im linken oberen Viertelkreis die Warnung angezeigt werden, gemeinsam mit einem von oben nach unten, also auf das Kraftfahrzeug zugerichteten Pfeil. Es sei noch angemerkt, dass die Darstellung auch eine Einblendung einer zu fahrenden Trajektorie bei der vollautomatischen Führung des Kraftfahrzeugs in der Kreuzungsumgebung umfassen kann.

Neben dem Verfahren betrifft die Erfindung auch ein Kraftfahrzeug, umfassend Radarsensoren und ein zur Durchführung des erfindungsgemäßen Verfahrens ausgebildetes, insbesondere einem Fahrerassistenzsystem und/oder Sicherheitssystem zugeordnetes Steuergerät. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: einen im erfindungsgemäßen Kraftfahrzeug verwendeten Radarsensor,
- Fig. 3: das Kraftfahrzeug in einer Kreuzungsumgebung gemeinsam mit anderen Verkehrsteilnehmern,
- Fig. 4: einen Ablaufplan eines Ausführungsbeispiels des erfindungsgemäßen Verfahrens,
- fig. 5: eine Skizze zur Anpassung von Erfassungsbereichen,
- Fig. 6: die Erhöhung der Zahl von ansteigenden Frequenzrampen,
- Fig. 7: eine kritische Verkehrssituation auf der Kreuzung, und
- Fig. 8: ein Darstellungselement.

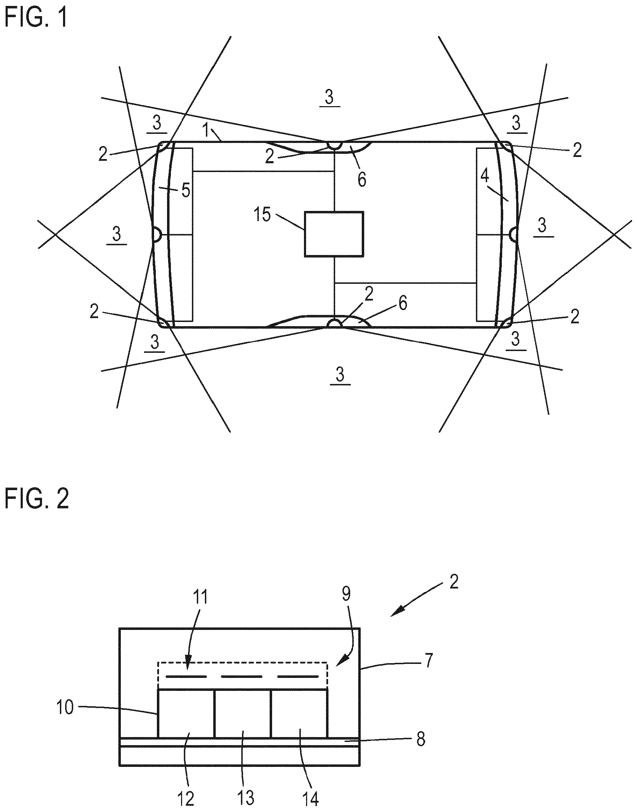

Fig. 1 zeigt eine Prinzipskizze eines erfindungsgemäßen Kraftfahrzeugs 1. Das Kraftfahrzeug 1 weist vorliegend acht als Weitwinkel-Radarsensoren ausgebildete Radarsensoren 2 auf, die auf Halbleiter-Technologie basieren, mithin kleinbauend realisiert sind und hochgenaue Radardaten über die Umgebung des Kraftfahrzeugs 1 liefern können. Wie die in Fig. 1 ebenso angedeuteten maximalen Erfassungsbereiche 3 der Radarsensoren 2 andeuten, wird dabei ein 360°-Winkelbereich rund um das Kraftfahrzeug 1 abgedeckt.

Die kleinbauenden Radarsensoren 2 sind dabei verdeckt im Kraftfahrzeug 1 verbaut, wobei die drei nach vorne gerichteten Radarsensoren 2 in einem vorderen Stoßfänger 4, die drei nach hinten ausgerichteten Radarsensoren 2 in einem hinteren Stoßfänger 5 und die beiden seitlichen Radarsensoren 2 in einer Tür 6 des Kraftfahrzeugs 1 verbaut sind. Zum Verbau von Radarsensoren 2 in Türen 6 des Kraftfahrzeugs 1 kann in das Türblech ein radardurchlässiges Fenster eingesetzt sein, welches überlackiert wurde und somit unsichtbar ist.

Fig. 2 zeigt die Ausgestaltung der verwendeten Radarsensoren 2 genauer. Jeder Radarsensor 2 weist ein Gehäuse 7 auf, in dem eine Leiterplatte 8 gehaltert ist. Auf der Leiterplatte 8 ist ein Package 9 angeordnet, das durch einen hier als CMOS-Chip ausgebildeten Halbleiterchip 10 und eine Antennenanordnung 11 des Radarsensors 2 gebildet wird. Durch den Halbleiterchip 10 werden neben einem Radartransceiver 12 auch eine Steuereinheit 13 und eine digitale Signalverarbeitungskomponente 14 des Radarsensors 2 realisiert. Die Radarsensoren 2 können in einem Frequenzbereich von 77 bis 81 GHz betrieben werden und sind zur Nutzung einer Frequenzbandbreite von bis hin zu 4 GHz ausgebildet.

Die Radarsensoren 2 liefern ihre Radardaten an ein Steuergerät 15, welches vorliegend als Steuergerät 15 eines zentralen Fahrerassistenzsystems ausgebildet ist, mithin Sensordaten aller Umgebungssensoren des Kraftfahrzeugs 1 sammelt, somit auch die Radardaten der Radarsensoren 2, diese für Funktionen verschiedener Fahrerassistenzsysteme und/oder Sicherheitssysteme aufbereitet und die entsprechenden Funktionen auch selbst ausführt. Insbesondere nutzt das Steuergerät 15 die Radardaten, um ein Umfeldmodell für die Umgebung des Kraftfahrzeugs 1 auf deren Basis zu ermitteln.

Durch die hochintegrierte Ausbildung der Radarsensoren 2 mit dem Halbleiterchip 10 ist es möglich, diese in verschiedenen Betriebsmodi, also mit verschiedenen Betriebsparametern, zu betreiben, um die Detektionseigenschaften der Radarsensoren 2 auf eine bestimmte Situation anzupassen. Neben wenigstens eines Normalbetriebsmodus kann vorliegend aufgrund von Steuerdaten durch die Steuereinheit 13 auch ein (teilweise variabler) Kreuzungsbetriebsmodus aktiviert werden, der verwendet wird, wenn der Radarsensor 2 Teile einer Kreuzungsumgebung aufnehmen soll. Die Steuerdaten erhalten die Radarsensoren 2 von dem Steuergerät 15, das zur Durchführung des erfindungsgemäßen Verfahrens ausgebildet ist.

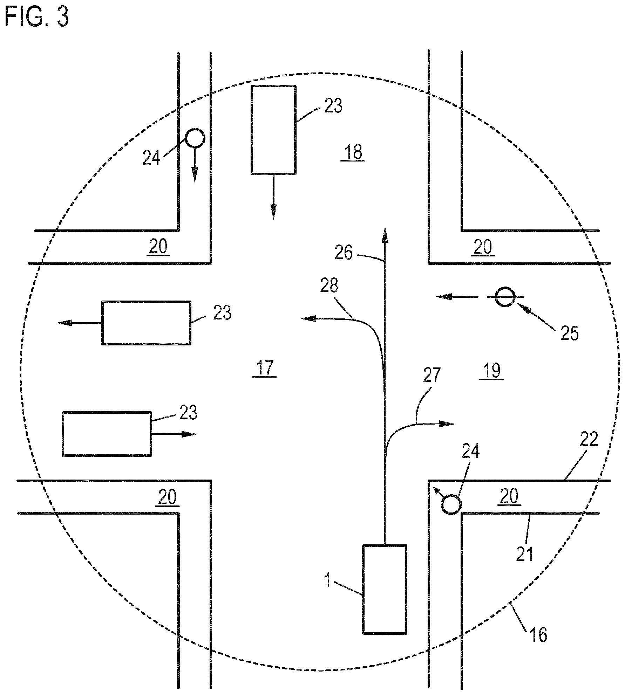

Fig. 3 zeigt das Kraftfahrzeug 1, während es in einer Kreuzungsumgebung 16 einer Kreuzung 17 betrieben wird. Die Kreuzungsumgebung 16 ist dabei anhand der maximalen Reichweite der Radarsensoren 2 im Kreuzungsbetriebsmodus definiert. Die Kreuzung wird durch befahrbare Flächen darstellende Straßen 18, 19 sowie diesen benachbarte Gehsteige 20, also begehbare bzw. bedingt befahrbare Flächen, gebildet. Die Gehsteige 20 wiederum sind durch Randbebauungsobjekte 21 begrenzt, zur Straße hin durch eine Straßenbegrenzung 22, hier einen Bordstein. In der Kreuzungsumgebung 16 liegt eine äußerst komplexe Fahrsituation mit einer Vielzahl anderer Verkehrsteilnehmer vor, vorliegend weiterer Kraftfahrzeuge 23, Fußgänger 24 und Radfahrer 25. Hierzu kommt, dass das Kraftfahrzeug 1 verschiedene Bahnen durch die Kreuzung 17 nehmen kann, beispielsweise diese gemäß dem Pfeil 26 geradeaus durchfahren, gemäß dem Pfeil 27 nach rechts abbiegen und gemäß dem Pfeil 28 nach links abbiegen.

Mithin zielt das im Folgenden beschriebene Ausführungsbeispiel des erfindungsgemäßen Verfahrens darauf ab, die Fahrsituation, insbesondere alle Verkehrsteilnehmer, hochauflösend und hochgenau zu erfassen, dabei die erfassbaren Objekte verlässlich zu trennen und somit eine hochqualitative Funktionalität von Fahrerassistenzsystemen/Sicherheitssystemen zu gewährleisten, die Falschwarnungen und dergleichen vermeidet und somit die Akzeptanz der Fahrerassistenzsysteme/Sicherheitssysteme in der Kreuzungsumgebung 16 erhöht. Insbesondere wird dabei Wert auf eine hohe Geschwindigkeitsauflösung (Dopplerauflösung) und eine hohe Winkelauflösung gelegt, während eine hohe Anstandsauflösung und eine hohe Reichweite weniger wichtig sind.

In einem Schritt S1 wird überprüft, ob das Kraftfahrzeug in einer Kreuzungsumgebung 16 betrieben wird. Hierzu existieren verschiedene Möglichkeiten, die auch kombiniert eingesetzt werden können. Beispielsweise können prädiktive Streckendaten und/oder Navigationsdaten eines Navigationssystems des Kraftfahrzeugs 1 genutzt werden. Zusätzlich oder alternativ kann eine entsprechende Auswertung von Sensordaten wenigstens eines Umgebungssensors des Kraftfahrzeugs 1, bevorzugt der Radardaten, erfolgen, um das Vorliegen der Kreuzung 17 anhand dieser zu erkennen. Schließlich können auch Verkehrszeichendaten einer Verkehrszeichenerkennung in die Erkennung des Betriebs in einer Kreuzungsumgebung 16 im Schritt S1 eingehen.

Wird also festgestellt, dass das Kraftfahrzeug 1 in einer Kreuzungsumgebung 16 betrieben wird, wird in einem Schritt S2 zunächst durch Auswertung von Radardaten der Radarsensoren 2 und zusätzlich von weiteren, beispielsweise in digitalem Kartenmaterial des Navigationssystems vorliegenden Zusatzdaten eine Kreuzungsgeometrieinformation ermittelt, die in weiteren Durchläufen der nun folgenden Schritte ständig aufgrund der aktuellen Radardaten verfeinert werden wird. Hierzu ist vorgesehen, in den Radardaten die Randbebauungsobjekte 21 und die Straßenbegrenzung 22 zu erkennen, was spätestens mit dem Umschalten der Radarsensoren in einen Kreuzungsbetriebsmodus, wie im Folgenden noch näher dargelegt werden wird, verlässlich und hochqualitativ möglich ist. Insbesondere beschreibt die Kreuzungsgeometrieinformation also befahrbare Unterbereiche (Flächen) der Kreuzungsumgebung 16, hier die Straßen 18, 19, und begehbare (bedingt befahrbare) Unterbereiche (Flächen) der Kreuzungsumgebung 16, hier die Gehsteige 20. Die so ermittelte Kreuzungsgeometrieinformation wird sowohl bei der Einstellung der Betriebsparameter der Radarsensoren 2 als auch bei der später erfolgenden Auswertung der Radardaten 2 weiter berücksichtigt. Es sei bereits an dieser Stelle darauf hingewiesen, dass aufgrund der Ermittlung der Kreuzungsgeometrieinformation aufgrund der Radardaten der Radarsensoren 2 auch die Pose, also Position und Orientierung, des Kraftfahrzeugs 1 in der Kreuzungsumgebung 16 relativ zu den befahrbaren und begehbaren/bedingt befahrbaren Flächen bekannt ist.

In einem Schritt S3 werden sodann Radarsensoren 2 ausgewählt, die in einem Kreuzungsbetriebsmodus betrieben werden sollen. Dabei erfolgt die Auswahl derart, dass nur die Radarsensoren 2, die auch Teile der Kreuzungsumgebung 16 erfassen, tatsächlich in den Kreuzungsbetriebsmodus geschaltet werden. Im Beispiel der Fig. 3 fährt das Kraftfahrzeug 1 beispielsweise gerade in die Kreuzungsumgebung 16 ein, so dass zumindest die hinteren, im hinteren Stoßfänger 5 verbauten Radarsensoren 2 nicht die Kreuzungsumgebung 16 erfassen und somit weiterhin im Normalbetriebsmodus verbleiben können.

Der Kreuzungsbetriebsmodus ist, wie bereits erwähnt wurde, darauf abgestellt, die Kreuzungsumgebung 16 (bzw. deren relevante Bereiche) möglichst hochauflösend in Winkel und Geschwindigkeit und mit klarer Trennfähigkeit der statischen und dynamischen Objekte zu erfassen, um somit eine verlässliche Grundlage für Funktionen des Fahrerassistenzsystems/Sicherheitssystems zu bieten. Hierzu werden konkret verschiedene Betriebsparameter angepasst.

Dabei ist, wie dargelegt wurde, die Abstandsauflösung weniger hoch priorisiert, so dass lediglich in einem in relativ wenigen Messzyklen verwendeten Subbetriebsmodus die Radarsensoren 2, die die Kreuzungsumgebung 16 erfassen, mit der maximal möglichen Frequenzbandbreite, hier 4 GHz, betrieben werdem, was eine hervorragende Abstandstrennfähigkeit, allerdings auf Kosten der maximalen Erfassungsreichweite, bietet. Diese muss jedoch in Kreuzungsumgebungen 16 ohnehin nicht sonderlich groß sein und beträgt vorliegend noch wenigstens 20 m, insbesondere 30 m. Die Erfassungsreichweite ist für alle Subbetriebsmodi reduziert.

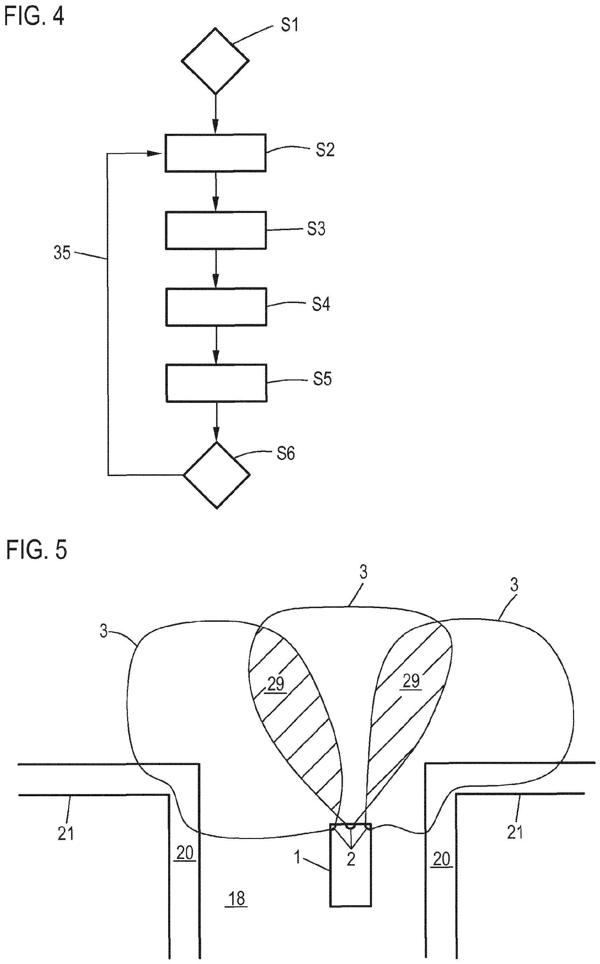

Wie bezüglich der Prinzipskizze der Fig. 5 näher erläutert werden soll, werden im Kreuzungsbetriebsmodus die Erfassungsbereiche 3 der Radarsensoren 2 angepasst, vorliegend so, dass möglichst große Überlappungsbereiche 29, wie in Fig. 5 beispielhaft dargestellt, entstehen. Dabei sei angemerkt, dass Fig. 5 zur einfacheren Darstellung nur jeweils die Überlappung von zwei Erfassungsbereichen 3 zeigt, es jedoch in der Praxis häufig vorkommen wird, dass aufgrund der weitwinkligen Ausbildung der Radarsensoren 2 wenigstens drei Erfassungsbereiche unterschiedlicher Radarsensoren 2 i bestimmten Ortsbereichen überlappen werden. Die Überlappungsbereiche 29 liefern redundante Radardaten, die gegeneinander plausibilisiert werden können und/oder durch statistische Kombination zur Verbesserung der Qualität der Radardaten herangezogen werden können.

Ferner erfolgt die Anpassung der Erfassungsbereiche 3 auch in Abhängigkeit der bestimmten Kreuzungsgeometrieinformation, so dass, wie beispielsweise an den beiden äußeren dargestellten Erfassungsbereichen 3 ersichtlich ist, die ohnehin unveränderlichen Randbebauungsobjekte 21 ausgeblendet werden können und dergleichen. Die Anpassung der Erfassungsbereiche 3 hinsichtlich der Kreuzungsgeometrieinformation erfolgt bevorzugt dynamisch, also grundsätzlich abgestimmt auf die aktuell vorliegende Kreuzungsgeometrieinformation, die sich ja, sobald hochaufgelöstere Radardaten von Radarsensoren 2 im Kreuzungsbetriebsmodus vorliegen, deutlich verfeinern. Eine weitere Dynamik kann selbstverständlich auch aufgrund bereits detektierter, sich bewegender Objekte gegeben sein, indem die Erfassungsbereiche/Abstrahlcharakteristiken zur besonders hochaufgelösten Erfassung dieser Objekte angepasst werden.

Anpassungen der Erfassungsbereiche 3 bzw. der Abstrahlcharakteristik können beispielsweise durch Zuschalten/Abschalten einzelnen Antennenelemente der Antennenanordnung 11 erfolgen.

Neben einer Anpassung der Erfassungsbereiche ist im Kreuzungsbetriebsmodus auch vorgesehen, die Winkelauflösung zu verbessern, weshalb vorliegend insbesondere zusätzliche/verbesserte Winkelauflösungsalgorithmen aktiviert werden, im hier gezeigten Ausführungsbeispiel ein MUSIC-Algorithmus und/oder ein ESPRIT-Algorithmus. Zusätzlich zu der hohen Abstandstrennfähigkeit ist dann auch eine hervorragende Winkeltrennfähigkeit gegeben.

Diese lässt sich, insbesondere für seitlich ausgerichtete Radarsensoren 2, weiter verbessern, indem das SAR.Konzept (Synthetic Aperture Radar) eingesetzt wird, ggf. zur Freischaltung der benötigten Ressourcen unter weiterer Reduzierung der Abstandstrennfähigkeit und/oder Reichweite.

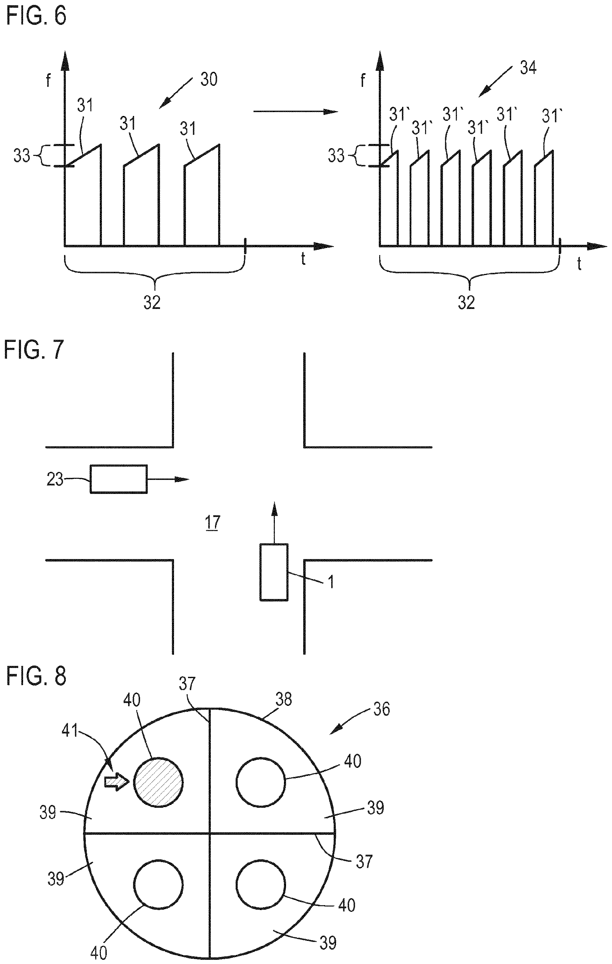

Die Verwendung von auf Halbleitertechnologie basierenden Radarsensoren 2 ermöglicht es auf besonders einfache Art und Weise zudem, die Dopplerauflösung zu erhöhen, um eine hochgenaue Geschwindigkeitsmessung unabhängig von der Abstandsmessung vornehmen zu können. Hierzu wird die Anzahl der ansteigenden Frequenzrampen, also der "up-chirps", erhöht, wie durch Fig. 6 näher erläutert werden soll. Diese ist rein schematisch zu verstehen, da die Anzahl der verwendeten ansteigenden Frequenzrampen in der Praxis deutlich höher ist, beispielsweise bei 64 im Normalbetriebsmodus und bei 256 oder mehr im Kreuzungsbetriebsmodus. In Fig. 6 zeigt das linke Diagramm 30 drei durch ansteigende Frequenzrampen 31 beschriebene, innerhalb der Dauer 32 eines Messzyklus verwendete Chirps. Die ansteigenden Frequenzrampen 31 decken dabei die Frequenzbandbreite 33, im entsprechenden Subbetriebsmodus beispielsweise 1 GHz, ab. Diese Anzahl ansteigender Frequenzrampen 21 wird zur Erhöhung der Dopplerauflösung im Kreuzungsbetriebsmodus, rechtes Diagramm 34, erhöht. Hierzu ist vorliegend vorgesehen, die Steigung der Frequenzrampen 31 zu erhöhen, so dass die Frequenzrampen 31' entstehen, die kürzere Chirps beschreiben, vorliegend die doppelte Anzahl von Chirps innerhalb derselben Messdauer 32. Vorgesehen sein kann auch, die Messdauer 32 zu erhöhen, um die Anzahl der ansteigenden Frequenzrampen 31 zu erhöhen.

Wie bereits angedeutet wurde, kann der Kreuzungsbetriebsmodus auch vorsehen, dass für unterschiedliche Messzyklen zwischen unterschiedlichen Subbetriebsmodi gewechselt wird. Dabei ist vorliegend vorgesehen, dass der Anteil von Subbtriebsmodus-Messzyklen, in denen mit hoher Abstandsauflösung gemessen wird, beispielsweise bei einer Frequenzbandbreite von 4 GHz, reduziert ist, insbesondere, indem fünf Messzyklen in einem weiteren Subbetriebsmodus, in dem die Frequenzbandbreite nur 1 GHz beträgt, aber die Geschwindigkeits- und Winkelauflösung erhöht ist, durch nur jeweils einen Messzyklus mit dem erstgenannten Subbetriebsmodus unterbrochen werden.

Im Schritt S4, vgl. wiederum Fig. 4, werden die Radardaten dann verwendet, um ein Umfeldmodell, das die Kreuzungsumgebung 16 hochgenau beschreibt, zu ermitteln, welches im Übrigen auch zumindest implizit die aktualisierte Kreuzungsgeometrieinformation enthält, da durch die Radarsensoren 2 auch die Straßenbegrenzung 22 und die Randbebauungsobjekte 21 detektiert werden. Ferner beschreibt das Umfeldmodell bevorzugt die anderen Verkehrsteilnehmer, im Beispiel der Fig. 3 die weiteren Kraftfahrzeuge 23, die Fußgänger 24 und die Fahrradfahrer 25. Diese Objekte können aufgrund des Kreuzungsbetriebsmodus klar identifiziert, getrennt und klassifiziert werden, da in allen Bereiche eine Hochauflösung gegeben ist.

Im Schritt S5 werten diverse Maßnahmenkriterien die in Form des Umfeldmodells aufbereiteten Radardaten aus, um Funktionen von Fahrerassistenzsystemen/Sicherheitssystemen zu realisieren. Es sei angemerkt, dass durch ein Fahrerassistenzsystem insbesondere auch eine vollständig automatische Führung des Kraftfahrzeugs 1 über die Kreuzung 17 erfolgen kann, wobei zweckmäßigerweise die Kreuzungsgeometrieinformation auch bei anderen Funktionen/Maßnahmenkriterien, bei der Ermittlung von zukünftigen Trajektorien des eigenen Kraftfahrzeugs 1 sowie anderer Verkehrsteilnehmer berücksichtigt wird.

Als Maßnahmenkriterium, dem als Maßnahme die Ausgabe einer Warninformation zugeordnet ist, ist vorliegend auch ein Sicherheitskriterium vorgesehen, mithin zur Realisierung der Funktion eines Sicherheitssystems, was im Folgenden im Hinblick auf die Figuren 7 und 8 noch näher erläutert werden soll.

Im Schritt S6 wird überprüft, ob der Betrieb des Kraftfahrzeugs 1 innerhalb der Kreuzungsumgebung 16 beendet ist. Ist dies der Fall, werden die Radarsensoren 2 wieder in den Normalbetriebsmodus zurückgeschaltet und das Verfahren endet. Ist jedoch weiterhin ein Betrieb innerhalb der Kreuzungsumgebung 16 gegeben, wird gemäß dem Pfeil 35 wieder zum Schritt S2 zurückgekehrt, in dem eine Verfeinerung der Kreuzungsgeometrieinformation stattfindet.

Fig. 7 zeigt in vereinfachter Darstellung eine Fahrsituation auf der Kreuzung 17, in der eine Kollision zwischen dem Kraftfahrzeug 1 und einem weiteren Kraftfahrzeug 23 droht, mithin beispielsweise durch Auswertung aufbereiteten Radardaten eine hohe, gemäß einem Sicherheitskriterium einen Schwellwert überschreitende Kollisionswahrscheinlichkeit gegeben ist. Für diese wird ein während des gesamten Betriebs in der Kreuzungsumgebung 16 angezeigtes Darstellungselement 36 verwendet, welches vorliegend kreisförmig ausgebildet ist. Eine waagerechte und eine senkrechte Linie 37 symbolisieren die Straßen 18, 19 und teilen den Kreis 38 in vier Viertelkreise 39, in denen hier jeweils ein Unterkreis 40 als Symbol dargestellt ist.

Ist nun die kritische Situation gemäß Fig. 7 gegeben, wird als Warninformation der Unterkreis 40, der sich im Vierteilkreis 39 links oben befindet, nicht länger, wie bislang, in weiß dargestellt, sondern, wie durch die Schraffur angedeutet ist, rot eingefärbt. Zudem wird ein Pfeil 41 eingeblendet, ebenso in rot, der die Richtung der drohenden Gefahr angibt. Intuitiv kann der Fahrer anhand des Darstellungselements 36 mithin die Gefahr erfassen und räumlich zuordnen. Er kann sein Fahrverhalten entsprechend anpassen. Dabei sei noch angemerkt, dass die Zuordnung zu den Viertelkreisen anhand der dem entsprechenden Gebiet zugewandten Fahrspuren erfolgt. Im gezeigten Beispiel fährt der Verkehrsteilnehmer 23 auf der Linksabbiegerspur der entsprechenden Straße.

Selbstverständlich sind im Rahmen der vorliegenden Erfindung auch andere, grundsätzlich im Stand der Technik bekannte Maßnahmen zur Erhöhung der Sicherheit im Kraftfahrzeug möglich, insbesondere Fahreingriffe und dergleichen.

## Patentansprüche

1. Verfahren zum Betrieb von Radarsensoren (2) in einem Kraftfahrzeug (1), wobei die Radardaten der Radarsensoren (2) durch wenigstens ein Fahrerassistenzsystem und/oder Sicherheitssystem ausgewertet werden, wobei bei Erkennung eines Betriebs des Kraftfahrzeugs (1) in einer Kreuzungsumgebung (16) wenigstens die die Kreuzungsumgebung (16) erfassenden Radarsensoren (2) in einem durch wenigstens einen kreuzungsspezifischen Betriebsparametersatz beschriebenen Kreuzungsbetriebsmodus betrieben werden,
**dadurch gekennzeichnet,**
**dass** eine Kreuzungsgeometrieinformation durch Lokalisierung von Straßenbegrenzungen (22) und/oder Randbebauungsobjekten (21) in den Radardaten ermittelt wird, wobei die Erfassungsbereiche (3) der Radarsensoren (2) anhand der aus den Radardaten gewonnenen Kreuzungsgeometrieinformation auf die Kreuzungsgeometrie angepasst werden.

2. Verfahren nach Anspruch 1,
**dadurch gekennzeichnet,**
**dass** zur Erkennung eines Betriebs in einer Kreuzungsumgebung (16) prädiktive Streckendaten und/oder Navigationsdaten eines Navigationssystems und/oder Sensordaten wenigstens eines Umgebungssensors des Kraftfahrzeugs (1), insbesondere die Radardaten, und/oder Verkehrszeichendaten einer Verkehrszeichenerkennung ausgewertet werden.

3. Verfahren nach Anspruch 1 oder 2,
**dadurch gekennzeichnet,**
**dass** Radarsensoren (2) mit einem einen Radartransceiver (12) realisierenden Halbleiterchip (10), insbesondere CMOS-Chip, verwendet werden.

4. Verfahren nach Anspruch 3,
**dadurch gekennzeichnet,**
**dass** durch den Halbleiterchip (10) auch eine Steuereinheit (13) des Radarsensors (2) und/oder eine digitale Signalverarbeitungskomponente (14) des Radarsensors (2) realisiert werden und/oder der Halbleiterchip (10) und eine Antennenanordnung (11) des Radarsensors (2) als ein Package (9) realisiert sind.

5. Verfahren nach einem der vorangehenden Ansprüche,
**dadurch gekennzeichnet,**
**dass** die Radarsensoren (2) im Kreuzungsbetriebsmodus mit einer Frequenzbandbreite (33) von wenigstens 1 GHz, insbesondere von 4 GHz, und/oder mit einer gegenüber einem Normalbetriebsmodus reduzierten Reichweite betrieben werden.

6. Verfahren nach einem der vorangehenden Ansprüche,
**dadurch gekennzeichnet,**
**dass** im Kreuzungsbetriebsmodus gegenüber einem Normalbetriebsmodus die Anzahl von in einem Messzyklus verwendeten ansteigenden Frequenzrampen (31, 31') erhöht ist, insbesondere durch Erhöhung der Anzahl der Chirps bei pro Messzeit im Messzyklus und/oder durch Verlängerung der Messdauer (32) im Messzyklus.

7. Verfahren nach einem der vorangehenden Ansprüche,
**dadurch gekennzeichnet,**
**dass** im Kreuzungsbetriebsmodus die Erfassungsbereiche (3) der Radarsensoren (2) gegenüber einem Normalbetriebsmodus zu einer größeren Überlappung angepasst werden, wobei auf Überlappungsbereiche (29) der Erfassungsbereiche (3) mehrerer Radarsensoren (2) bezogene Radardaten gegeneinander plausibilisiert und/oder gemeinsam statistisch ausgewertet werden.

8. Verfahren nach einem der vorangehenden Ansprüche,
**dadurch gekennzeichnet,**
**dass** die Erfassungsbereiche (3) durch Aktivierung und/oder Deaktivierung von Antennenelementen einer oder der Antennenanordnung (11) wenigstens eines Radarsensors (2) angepasst werden.

9. Verfahren nach einem der vorangehenden Ansprüche,
**dadurch gekennzeichnet,**
**dass** die Kreuzungsgeometrieinformation bei der Prädiktion von zukünftigen Bewegungen des eigenen Kraftfahrzeugs (1) und/oder von Verkehrsteilnehmern seitens des Fahrerassistenzsystems und/oder Sicherheitssystems berücksichtigt wird, insbesondere unter weiterer Berücksichtigung einer Poseninformation des Kraftfahrzeugs (1) relativ zur Kreuzungsgeometrie.

10. Verfahren nach einem der vorangehenden Ansprüche,
**dadurch gekennzeichnet,**
**dass** bei in unterschiedlichen Subbetriebsmodi jeweils für einen Messzyklus betriebenen Radarsensoren (2) die Abfolge der Subbetriebsmodi und/oder die relative Anzahl der Subbetriebsmodi zueinander gegenüber einem außerhalb der Kreuzungsumgebung veränderten Normalbetriebsmodus verändert wird, insbesondere der Anteil von Messzyklen, die wenigstens einen Subbetriebsmodus mit hoher Abstandsauflösung nutzen, gegenüber dem Anteil an Messzyklen, die wenigstens einen Subbetriebsmodus mit niedrigerer Abstandsauflösung, aber höherer Geschwindigkeitsauflösung und/oder Winkelauflösung nutzen, reduziert ist.

11. Verfahren nach einem der vorangehenden Ansprüche,
**dadurch gekennzeichnet,**
**dass** im Kreuzungsbetriebsmodus wenigstens ein insbesondere zusätzlicher und/oder eine höhere Genauigkeit erzielender Winkelauflösungsalgorithmus, insbesondere ein MUSIC- und/oder ein ESPRIT-Algorithmus, aktiviert wird.

12. Verfahren nach einem der vorangehenden Ansprüche,
**dadurch gekennzeichnet,**
**dass** die Radardaten der Radarsensoren (2) zur Erstellung und/oder Aktualisierung eines Umfeldmodells des Kraftfahrzeugs (1) verwendet werden.

13. Verfahren nach einem der vorangehenden Ansprüche,
**dadurch gekennzeichnet,**
**dass** bei Detektion einer ein Kritikalitätskriterium erfüllenden Fahrsituation durch Auswertung der Radardaten wenigstens eine Warninformation an einen Fahrer des Kraftfahrzeugs (1) ausgegeben wird.

14. Verfahren nach Anspruch 13,
**dadurch gekennzeichnet,**
**dass** die Warninformation in einem schematischen, die Kreuzung (17) symbolisierenden Darstellungselement (36) ausgegeben wird.

15. Verfahren nach Anspruch 14,
**dadurch gekennzeichnet,**
**dass** als Darstellungselement (36) ein Kreis mit sich durch den Mittelpunkt des Kreises (36) erstreckenden geraden, die Straßen (18, 19) symbolisierenden Linien (37) gewählt wird, wobei ein Warnsymbol auf den Linien (37) und/oder gemeinsam mit einem einen Richtungspfeil (41) zur Zuordnung des Warnsymbols in einem der durch die Linien unterteilten Viertelkreise (39) eingeblendet wird.

16. Verfahren nach einem der vorangehenden Ansprüche,
**dadurch gekennzeichnet,**
**dass** im Kreuzungsbetriebsmodus zu betreibende Radarsensoren (2) in Abhängigkeit einer Positionsinformation relativ zu der Kreuzungsumgebung (16) derart ausgewählt werden, dass nur die Radarsensoren (2) im Kreuzungsbetriebsmodus betrieben werden, die die Kreuzungsumgebung (16) erfassen.

17. Kraftfahrzeug (1), umfassend Radarsensoren (2) und ein zur Durchführung eines Verfahrens nach einem der vorangehenden Ansprüche ausgebildetes Steuergerät (15).

## Claims

1. Method for operating radar sensors (2) in a motor vehicle (1), wherein the radar data of the radar sensors (2) are evaluated by at least one driver assistance system and/or safety system, wherein upon detection of operation of the motor vehicle (1) in an intersection area (16), at least the radar sensors (2) detecting the intersection area (16) are operated in an intersection operating mode described by at least one intersection-specific operating parameter set,
**characterised in**
**that** intersection geometry information is determined by localising road boundaries (22) and/or peripheral building objects (21) in the radar data, wherein the detection areas (3) of the radar sensors (2) are adapted to the intersection geometry on the basis of the intersection geometry information obtained from the radar data.

2. Method according to claim 1,
**characterised in**
**that** predictive route data and/or navigation data of a navigation system and/or sensor data of at least one environment sensor of the motor vehicle (1), in particular the radar data, and/or traffic sign data from traffic sign recognition are evaluated to detect operation in an intersection area (16).

3. Method according to claim 1 or 2,
**characterised in**
**that** radar sensors (2) are used with a semiconductor chip (10), in particular a CMOS chip, implementing a radar transceiver (12).

4. Method according to claim 3,
**characterised in**
**that** through the semiconductor chip (10) a control unit (13) of the radar sensor (2) and/or a digital signal processing component (14) of the radar sensor (2) are also implemented and/or the semiconductor chip (10) and an antenna arrangement (11) of the radar sensor (2) is implemented as a package (9).

5. Method according to any one of the preceding claims,
**characterised in**
**that** the radar sensors (2) are operated in the intersection operating mode with a frequency bandwidth (33) of at least 1 GHz, in particular of 4 GHz, and/or with a range that is reduced compared to a normal operating mode.

6. Method according to any one of the preceding claims,
**characterised in**
**that** in the intersection operating mode the number of ascending frequency ramps (31, 31') used in a measuring cycle is increased compared to a normal operating mode, in particular by increasing the number of chirps per measurement time in the measurement cycle and/or by extending the measurement duration (32) in the measurement cycle.

7. Method according to any one of the preceding claims,
**characterised in**
**that** in the intersection operating mode the detection areas (3) of the radar sensors (2) are adapted to a greater overlap compared to a normal operating mode, wherein radar data relating to overlapping areas (29) of the detection areas (3) of a plurality of radar sensors (2) are checked for plausibility against one another and/or are jointly statistically evaluated.

8. Method according to any one of the preceding claims,
**characterised in**
**that** the detection areas (3) are adapted by activating and/or deactivating antenna elements of an or the antenna arrangement (11) of at least one radar sensor (2).

9. Method according to any one of the preceding claims,
**characterised in**
**that** the intersection geometry information is taken into account by the driver assistance system and/or safety system when predicting future movements of the own motor vehicle (1) and/or of road users, in particular by further taking into account positional information of the motor vehicle (1) relative to the intersection geometry.

10. Method according to any one of the preceding claims,
**characterised in**
**that** in the case of radar sensors (2) operated respectively in different sub-operating modes for one measurement cycle, the sequence of sub-operating modes and/or the relative number of sub-operating modes to one another is changed compared to a normal operating mode changed outside of the intersection area, in particular, the proportion of measuring cycles that use at least one sub-operating mode with high distance resolution is reduced compared to the proportion of measuring cycles that use at least one sub-operating mode with lower distance resolution but higher speed resolution and/or angular resolution.

11. Method according to any one of the preceding claims,
**characterised in**
**that** in the intersection operating mode, at least one, in particular additional, angle resolution algorithm and/or an angle resolution algorithm achieving higher precision, in particular a MUSIC and/or an ESPRIT algorithm, is activated.

12. Method according to any one of the preceding claims,
**characterised in**
**that** the radar data of the radar sensors (2) are used to create and/or update an environment model of the motor vehicle (1).

13. Method according to any one of the preceding claims,
**characterised in**
**that** upon detection of a driving situation fulfilling a criticality criterion by evaluating the radar data, at least one piece of warning information is output to a driver of the motor vehicle (1).

14. Method according to claim 13,
**characterised in**
**that** the warning information is output in a schematic display element (36) symbolising the intersection (17).

15. Method according to claim 14,
**characterised in**
**that** a circle with straight lines (37) extending through the centre of the circle (36) and symbolising the streets (18, 19) is selected as the display element (36), wherein a warning symbol is displayed on the lines (37) and/or together with a directional arrow (41) for assigning the warning symbol in one of the quarter circles (39) divided by the lines.

16. Method according to any one of the preceding claims,
**characterised in**
**that** radar sensors (2) to be operated in the intersection operating mode are selected as a function of position information relative to the intersection area (16), such that only the radar sensors (2) that detect the intersection area (16) are operated in the intersection operating mode.

17. Motor vehicle (1), comprising radar sensors (2) and a control device (15) designed to carry out a method according to any one of the preceding claims.

## Revendications

1. Procédé de fonctionnement de capteurs radars (2) dans un véhicule automobile (1), dans lequel les données de radar des capteurs radars (2) sont analysées par au moins un système d'assistance au conducteur et/ou un système de sécurité, dans lequel en cas d'identification d'un fonctionnement du véhicule automobile (1) dans un environnement d'intersection (16) au moins les capteurs radars (2) saisissant l'environnement d'intersection (16) sont actionnés dans un mode de fonctionnement d'intersection décrit par au moins un ensemble de paramètres de fonctionnement spécifiques de l'intersection,
**caractérisé en ce que**
une information de géométrie d'intersection est déterminée par localisation de délimitations de route (22) et/ou d'objets d'aménagement latéraux (21) dans les données de radar, dans lequel les zones de saisie (3) des capteurs radars (2) sont adaptées à la géométrie d'intersection sur la base de l'information de géométrie d'intersection obtenue à partir des données de radar.

2. Procédé selon la revendication 1,
**caractérisé en ce que**
pour déterminer un fonctionnement dans un environnement d'intersection (16), des données de trajet prédictives et/ou des données de navigation d'un système de navigation et/ou des données de capteur d'au moins un capteur d'environnement du véhicule automobile (1), en particulier les données de radar et/ou les données de panneaux de signalisation d'une identification de panneaux de signalisation sont analysées.

3. Procédé selon la revendication 1 ou 2,
**caractérisé en ce que**
des capteurs radars (2) dotés d'une puce semi-conductrice (10) réalisant un émetteur-récepteur radar (12), en particulier une puce CMOS, sont utilisés.

4. Procédé selon la revendication 3,
**caractérisé en ce que**
par le biais de la puce semi-conductrice (10), une unité de commande (13) du capteur radar (2) et/ou un composant de traitement de signal numérique (14) du capteur radar (2) sont également réalisés et/ou la puce semi-conductrice (10) et un agencement d'antenne (11) du capteur radar (2) sont réalisés sous la forme d'un package (9).

5. Procédé selon l'une quelconque des revendications précédentes,
**caractérisé en ce que**
les capteurs radars (2) sont actionnés dans le mode de fonctionnement d'intersection avec une largeur de bande de fréquence (33) d'au moins 1 GHz, en particulier de 4 GHz et/ou avec une portée réduite par rapport à un mode de fonctionnement normal.

6. Procédé selon l'une quelconque des revendications précédentes,
**caractérisé en ce que**
dans le mode de fonctionnement d'intersection par rapport à un mode de fonctionnement normal, le nombre de rampes de fréquence (31, 31') croissant utilisé dans un cycle de mesure augmente, en particulier par augmentation du nombre de chirps par temps de mesure dans le cycle de mesure et/ou par prolongement de la durée de mesure (32) dans le cycle de mesure.

7. Procédé selon l'une quelconque des revendications précédentes,
**caractérisé en ce que**
dans le mode de fonctionnement d'intersection, les zones de saisie (3) des capteurs radars (2) par rapport à un mode de fonctionnement normal sont adaptées à un chevauchement supérieur, dans lequel sur des zones de chevauchement (29) des zones de saisie (3), la plausibilité de plusieurs données de radar relatives aux capteurs radars (2) les unes par rapport aux autres est évaluée et/ou elles sont conjointement soumises à une analyse statistique.

8. Procédé selon l'une quelconque des revendications précédentes,
**caractérisé en ce que**
les zones de saisie (3) sont adaptées par activation et/ou désactivation d'éléments d'antenne d'un ou de l'agencement d'antenne (11) d'au moins un capteur radar (2).

9. Procédé selon l'une quelconque des revendications précédentes,
**caractérisé en ce que**
les informations de géométrie d'intersection sont prises en compte lors de la prédiction de déplacements ultérieurs du propre véhicule automobile (1) et/ou d'usagers de la route par le système d'assistance au conducteur et/ou le système de sécurité, en particulier en prenant en compte en outre une information de position du véhicule automobile (1) par apport à la géométrie d'intersection.

10. Procédé selon l'une quelconque des revendications précédentes,
**caractérisé en ce que**
dans le cas de capteurs radars (2) actionnés respectivement pour un cycle de mesure dans des modes de sub-fonctionnement différents, la séquence des modes de sub-fonctionnement et/ou le nombre relatif de modes de sub-fonctionnement est modifié(e) par rapport à un mode de fonctionnement normal modifié en dehors de l'environnement d'intersection, en particulier la proportion de cycles de mesure qui utilisent au moins un mode de sub-fonctionnement avec une résolution d'intervalle supérieure est réduite par rapport à la proportion de cycles de mesure qui utilisent au moins un mode de sub-fonctionnement avec une résolution d'intervalle plus faible mais une résolution de vitesse et/ou une résolution angulaire supérieure.

11. Procédé selon l'une quelconque des revendications précédentes,
**caractérisé en ce qu'**en mode de fonctionnement d'intersection, au moins un algorithme de résolution angulaire parvenant en particulier à une précision supplémentaire et/ou supérieure, en particulier un algorithme MUSIC et/ou ESPRIT est activé.

12. Procédé selon l'une quelconque des revendications précédentes,
**caractérisé en ce que**
les données de radar des capteurs radars (2) sont utilisées pour produire et/ou actualiser un modèle d'entourage du véhicule automobile (1).

13. Procédé selon l'une quelconque des revendications précédentes,
**caractérisé en ce que**,
en cas de détection d'une situation de conduite remplissant un critère de criticité, au moins une information de mise en garde est émise à un conducteur du véhicule automobile (1) par l'analyse des données de radar.

14. Procédé selon la revendication 13,
**caractérisé en ce que**
l'information de mise en garde est émise dans un élément de représentation schématique (36) symbolisant l'intersection (17).

15. Procédé selon la revendication 14,
**caractérisé en ce que**
un cercle est choisi comme élément de représentation (36) avec des lignes droites (37) symbolisant les rues (18, 19) passant par le point central du cercle (36), dans lequel un symbole de mise en garde est affiché sur les lignes (37) et/ou conjointement avec une flèche de direction (41) pour l'affectation du symbole de mise en garde dans l'un des quarts de cercle (39) subdivisés par les lignes.

16. Procédé selon l'une quelconque des revendications précédentes,
**caractérisé en ce que**
dans le mode de fonctionnement d'intersection, des capteurs radars (2) à actionner en fonction d'une information de position par rapport à l'environnement d'intersection (16) sont choisis de telle sorte que seuls les capteurs radars (2) en mode de fonctionnement d'intersection qui saisissent l'environnement d'intersection (16) sont actionnés.

17. Véhicule automobile (1), comprenant des capteurs radars (2) et un dispositif de commande (15) conçu pour la réalisation d'un procédé selon l'une quelconque des revendications précédentes.
